# EUROPEAN PATENT APPLICATION

(11) **EP 3 696 667 A1**
(43) Date of publication of application: **19.08.2020**
(21) Application number: 19157445.8
(22) Date of filing: 15.02.2019
(51) Int. Cl.: G06F 9/451, G06F 3/12, G06F 3/0482

(54) **METHOD OF CONTROLLING A DYNAMIC USER INTERFACE**

(71) Applicant: Canon Production Printing Holding B.V., 5914 CA Venlo (NL)
(72) Inventor: BANDEA, Vasile, 5914 CA Venlo (NL); DRONCA, Georgeta, 5914 CA Venlo (NL)
(74) Representative: Canon Production Printing IP Department

(57) **Abstract**

A method of controlling at least one user interface screen by means of a computer system. The at least one user interface screen is arranged to display a plurality of frames for displaying frame content. The at least one user interface screen simultaneously displays a first frame provided with user selectable first frame content and a first user actionable link item, and a second frame provided with a second user actionable link item. Upon receiving an activation of the first user actionable link item, the first user actionable link item on the first frame is accentuated. Upon receiving an activation of the second user actionable link item, the second user actionable input link item on the second frame is accentuated. A digital link between the first frame and the second frame is stored in memory of the computer system. The second frame is permitted to display data retrieved from memory of the computer system which data is a detailing dependent on a real subset of the selectable first frame content of the first frame. The second frame is prohibited to display data retrieved from memory of the computer system which data is a detailing dependent on a real subset of frame content from another frame of the plurality of frames than the first frame.

## Description

### FIELD OF THE INVENTION

The invention relates to a method of controlling at least one user interface screen by means of a computer system, said at least one user interface screen being arranged to display a plurality of frames for displaying frame content.

### BACKGROUND OF THE INVENTION

Screen-based graphic user interfaces are frequently used for operating electronically controlled apparatus or systems such as, for example, a document processing system or a printing system. Depending upon the complexity of the system, the user interface may be utilized by a plurality of users who may have different functions and responsibilities, different needs, different skills and/or different authorizations. It is therefore convenient to customize the layout of the graphical user interface in accordance with the needs of individual users or groups of users.

Single or multi display software applications comprise at least one graphical user interface (GUI) with a number of UI components. For example, a production printing software application may have a multi-screen GUI comprising a first frame and a second frame for a preview application. The first frame may comprise a job list, a job scheduler, a job content browser, a document pre-flight component or a properties component.

A linking and interaction between frames is static in a sense that it is coded into a so-called "Business Logic" software layer or glueware code that defines how said components interact with each other according to an application workflow.

Due to the many frames on the multi/screen GUI, the user may become puzzled which UI frame corresponds with which preview frame.

Another problem arises since the preview component listens for "activeDocumentChanged" events independent from their source and so if - besides the first frame - another frame, for example a document browser of a second printer - produces such a event type, the view on the second frame is updated independent of the user of the first frame.

It is an object of the invention to provide a method by which the problems described here-above are mitigated.

### SUMMARY OF THE INVENTION

In order to achieve that object, the method comprises the steps of
- the at least one user interface screen (12) simultaneously displaying out of the plurality of frames (20), a first frame provided with user selectable first frame content and a first user actionable link item, and
   a second frame provided with a second user actionable link item,
- receiving an activation of the first user actionable link item,
- accentuating the first user actionable link item on the first frame,
- receiving an activation of the second user actionable link item,
- accentuating the second user actionable input link item on the second frame,
- storing a digital link between the first frame and the second frame in memory of the computer system,
- permitting the second frame to display data retrieved from memory of the computer system which data is a detailing dependent on a real subset of the selectable first frame content of the first frame, and
- prohibiting the second frame to display data retrieved from memory of the computer system which data is a detailing dependent on a real subset of frame content from another frame of the plurality of frames than the first frame.

By doing so, a user is able to bind the second frame only to the first frame and not to other frames of the plurality of frames. The linking of the frames on the at least one user interface screen is done by the user based on his own needs.

According to an embodiment the method comprising the steps of
- selecting a content item of the first frame content on the first frame,
- retrieving first data from memory of the computer system which first data is a detailing dependent on the selected content item, and
- displaying the first data as second frame content on the second frame.

According to an embodiment the method comprises the steps of
- determining if the second frame is capable of displaying the first data, before accentuating the second user actionable link item on the second frame and establishing the digital link; and
- upon a negative determination, providing a user warning on the at least one user interface screen.

According to an embodiment the method comprises the step of receiving an output type of the first data from memory of the computer system and displaying the first data as second frame content on the second frame according to the received output type.

According to an embodiment the method comprises the step of determining if there is an output adapter available for use on the at least one user interface screen, the output adapter being configured to adapt the first data in order to make the first data suitable as second frame content.

According to an embodiment the method comprises the step of providing the first user actionable link item together with a unique identifier item, and providing the second user actionable link item with a same unique identifier item such that the combination of the first user actionable link item and the second user actionable link item is uniquely identifiable.

According to an embodiment the selected one frame comprises a representation of a print job list for a printer and the other frame comprises a document browser for browsing documents of print jobs in the print job list for the printer.

According to an embodiment the print job list comprises a print job queue of the printer.

According to an embodiment a document of a print job in the print job list is a multi-layer document and the method comprises the steps of providing a set of output adapters for browsing the multi-layer document and receiving a user selection for one output adapter out of the set of output adapters.

According to an embodiment the method comprises a step of removing the digital link between the first frame and the second frame from the memory of the computer system by de-selecting the first user actionable link item on the first frame and de-selecting the second user actionable link item on the second frame.

According to an embodiment the method comprises the step of providing for the first frame at least two user actionable link items on the first frame, each of the at least two user actionable link items forming a unique combination with a user actionable link item on another frame of the plurality of frames.

The invention also relates to a computer system controlling at least one user interface screen, said at least one user interface screen being arranged to display a plurality of frames for displaying frame content and the computer system being configured to execute any of the methods according to the invention.

According to an embodiment the computer system comprises a print controller for a printing system, wherein the print controller is configured to apply any of the embodiments of the method according to the invention.

The invention also relates to a non-transitory computer-readable medium, comprising program code which, when executed on a computer, causes the computer to perform the steps of the method according to the invention.

### BRIEF DESCRIPTION OF THE DRAWINGS

Embodiment examples will now be described in conjunction with the drawings, wherein:
- FIG. 1: is a block diagram of a system to be controlled and an associated user interface according to the present invention;
- FIG. 2: are detailed views of UI screens according to the present invention;
- FIG. 3: is another example of linked UI frames according to the present invention;
- FIG. 4: is another example of linked UI frames with a link identification according to the present invention;
- FIG. 5 - 6: are UI screens with overlapping frames according to the present invention;
- FIG. 7: is a flow diagram of a first embodiment of the method according to the present invention; and
- FIG. 8: is a flow diagram of a second embodiment of the method according to the present invention.

### DETAILED DESCRIPTION OF EMBODIMENTS

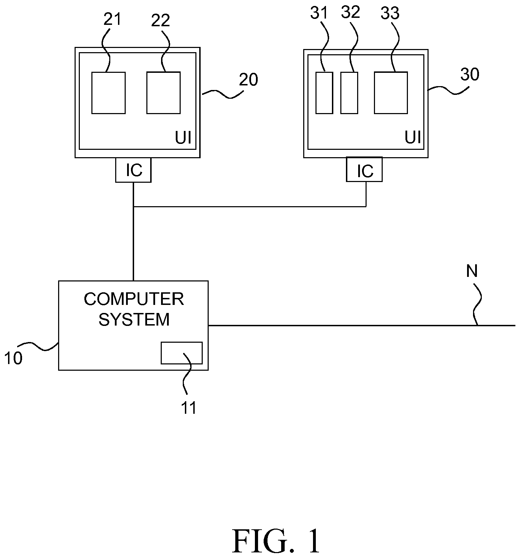

FIG. 1 is a block diagram in which a computer system 10 has been represented by a single block. The computer system 10 comprises a memory 11 for storing digital data. User interface screens 20, 30 associated with the computer system 10 comprise an interface controller IC in connection with the computer system 10. The user interface screens 20, 30 serve as a graphical output device but may also be configured as a touch-sensitive screen, so that it can serve as an input/output device for entering commands and for displaying messages to be output to a user. In another embodiment, a separate input device may be provided, e.g. in the form of a keyboard and a mouse. In FIG. 1 two user interface screens 20, 30 are present, but one or three or more user interface screens may be envisioned.

The user interface screens 20, 30 are controlled by the interface controller IC which is configured for wireless or wired communication with electronic controllers of various components of the computer system 10.

The user interface screen 20, 30 may for example be formed by a wireless mobile device such a smartphone with a suitable software application loaded therein and configured for wireless communication with the computer system 10.

The computer system 10 may be for example a print controller of a printing system.

In the example shown in FIG. 1, the display area of the UI screens 20, 30 is divided into a plurality of frames 21, 22, 31, 32, 33 which is reserved for displaying frame content. The frame content is data retrieved from memory of the computer system 10. The retrieved data may comprise for example general information on the computer system 10, status information of the computer system 10, information on available print options for a printer connected to the computer system 10, a list of print jobs presently waiting for being processed in a printer connected to the computer system 10, possibly with more detailed information on each print job, a job scheduler, a job content browser, a document pre-flight component, a print job properties component or a document preview application.

In FIG. 1 the frames 21, 22, 31, 32, 33 are distributed over the two UI screens 20, 30, but frames on one or more than two UI screens may be envisioned.

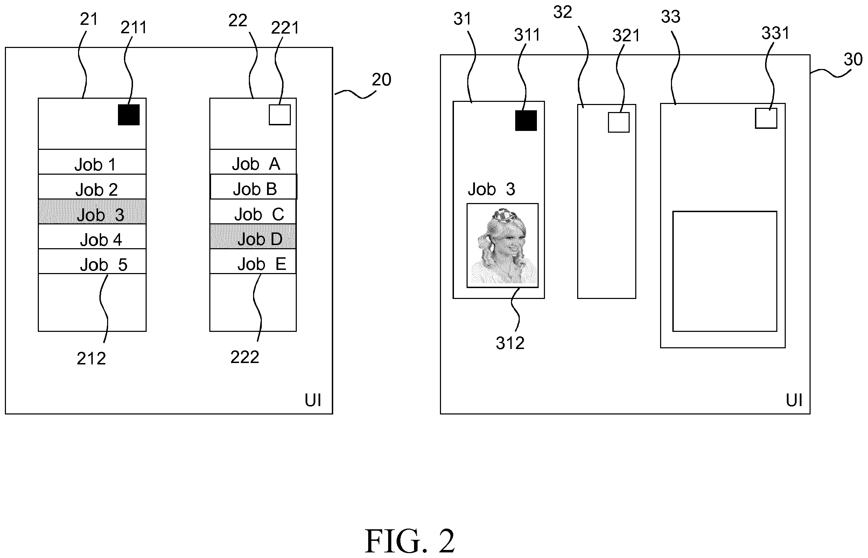

FIG. 2 shows the UI screens 20, 30 in more detail. For example, the UI screen 20 comprises a first frame 21 and a second frame 22.
The first frame 21 comprises user selectable frame content in the form of a print job list 212 containing the print job names "Job 1", "Job 2", "Job 3", "Job 4", "Job 5" of print jobs. The print jobs may be printed by a printing system coupled to the computer system 10.
The second frame 22 comprises user selectable frame content in the form of a print job queue 222 containing the print job names "Job A", "Job B", "Job C", "Job D", "Job E" of print jobs that are queued in the print job queue 222. The print jobs in the print job queue 222 are scheduled for printing by the printing system coupled to the computer system 10. A print job in the print job list 212 in the first frame 21 may for example be dragged to the print job queue 222 in the second frame 22 in order to be printed.

The first frame 21 also comprises a first user actionable link item 211 according to the invention. The first user actionable link item 211 is activated, i.e. the first user actionable link item 211 has received an activation trigger by means of a touch or a mouse click on the first user actionable link item 211 in the first frame 21. The activation of the first user actionable link item 211 is visualized by accentuating the first user actionable link item 211 as a black square in the first frame 21.

The second frame 22 also comprises a second user actionable link item 221 according to the invention. The second user actionable link item 221 is not activated, i.e. the second user actionable link item 221 has not received an activation trigger by means of a touch or a mouse click. The non-activation of the second user actionable link item 221 is visualized by displaying the second user actionable link item 221 as a white square in the second frame 22.

For example, the UI screen 30 comprises a third frame 31, a fourth frame 32 and a fifth frame 33.
The third frame 31 comprises frame content in the form of a preview image area 312. A viewer application residing in the computer system 10 is facilitating the function of displaying frame content in the third frame 31.
The third frame 31 also comprises a third user actionable link item 311 according to the invention. The third user actionable link item 311 is activated, i.e. the third user actionable link item 311 has received an activation trigger by means of a touch or a mouse click on the third user actionable link item 311 in the third frame 31. The activation of the third user actionable link item 311 is visualized by accentuating the third user actionable link item 311 as a black square in the first frame 31.

By activating the first user actionable link item 211 and the third user actionable link 311 a digital link between the first frame 21 and the third frame 31 is stored in memory 11 of the computer system 10. The third frame 31 is now permitted to display data retrieved from memory 11 of the computer system 10 which data is a detailing dependent on a real subset of the selectable first frame content of the first frame 21. The selectable first frame content is the print job list 212. A real subset of the print job list 212 may be in principle every real subset of selected print jobs from the print job list 212. In FIG. 2 the print job named "Job 3" is selected by a user action - touch or mouse click on the UI screen 201 - and a detail of the print job "Job 3", i.e. a preview of an image in the print job "Job 3" is becoming the frame content of the third frame 31. The preview image of the print job "Job 3" is residing in an image viewer area 312 in the third frame 31.

The digital link between the first frame 21 and the third frame 31 is also prohibiting the third frame 31 to display data retrieved from memory 11 of the computer system 10 which data is a detailing dependent on a real subset of frame content from another frame 22 of the plurality of frames 22, 32, 33 than the first frame 31.
For example, from the print job queue 222 in the second frame 22 a print job "Job D" is selected. A preview of an image of the print job "Job D" is prohibited to be shown in the image viewer area 312 in the third frame 31. Moreover, since the second user actionable link item 221 of the second frame 22 is not activated, there is no link between the second frame 22 and any other frame which might comprise an image viewer area. So actually, an image of the selected print job "Job D" cannot be previewed on the UI screens 20, 30.

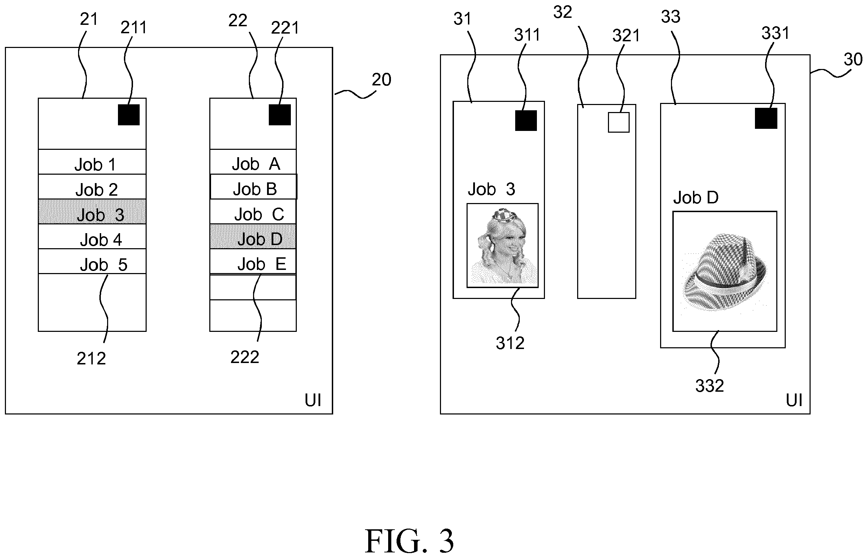

The latter situation can be avoided, for example as shown in FIG. 3, by linking the second frame 22 with the fifth frame 33 which also comprises an image viewer area 332. The user may activate a second user actionable link item 221 in the second frame 22 and a fifth user actionable link item 331 in the fifth frame 33 in order to establish such a link. After doing so, the image viewer area 332 in the fifth frame 33 will display an image of the selected print job "Job D" of the print job queue 222 in the second frame 22.

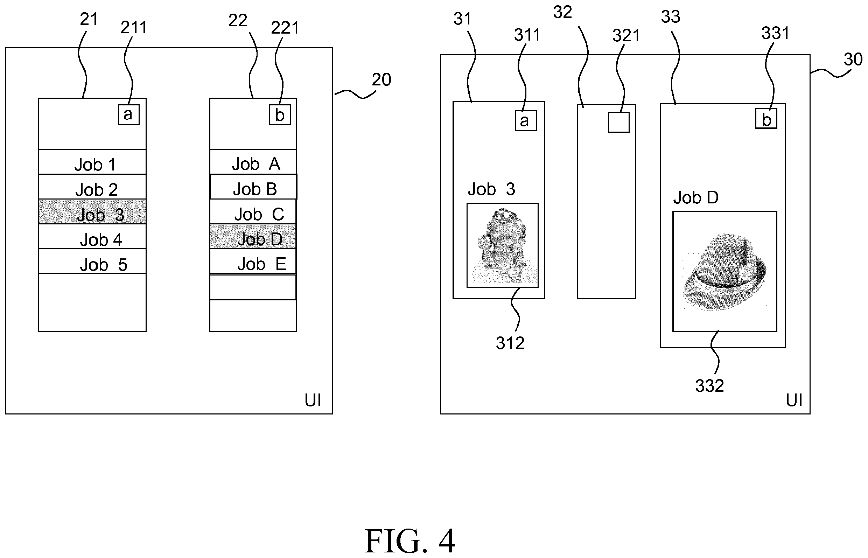

In FIG. 3 the first, second, third and fifth user actionable link items 221, 221, 311, 331 in the first, second, third and fifth frame 21, 22, 31, 33 are activated respectively.
In order to distinguish the link between the first frame 21 and the third frame 31 from the link between the second frame 22 and the fifth frame 33, another embodiment of the present invention is shown in FIG. 4.
In FIG. 4 the first user actionable link item 221 is provided with a unique identifier item "a", the third user actionable link item 311 is also provided with a same unique identifier item "a". Due to the same unique identifier the combination of the first user actionable link item 211 and the third user actionable link item 311 is uniquely identifiable. In other words, the digital link between the first frame 21 and the third frame 31 is recognizable by looking at the same identifier items "a" at the corresponding user actionable link items 211, 311.
In the same way, FIG. 4 shows the digital link between the second frame 22 and the fifth frame 33 which is now recognizable by looking at same identifier items "b" at the corresponding user actionable link items 221, 331.

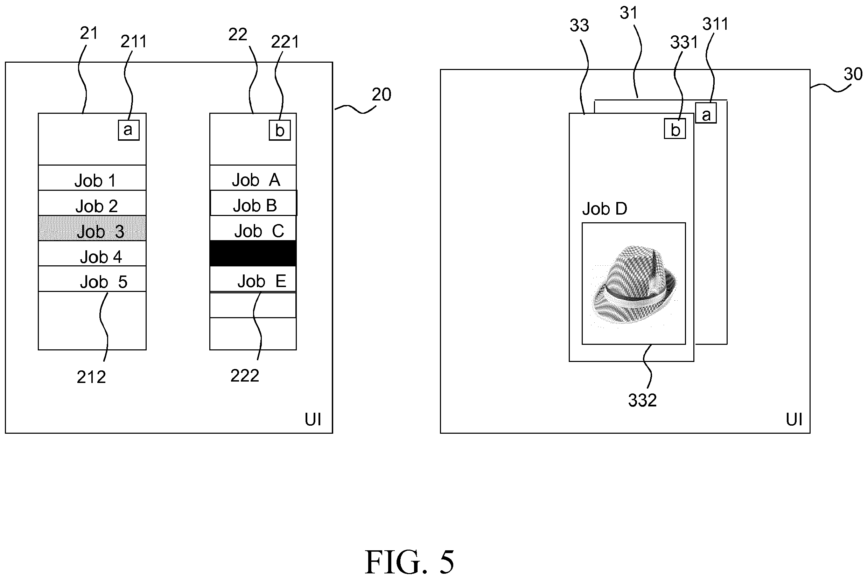

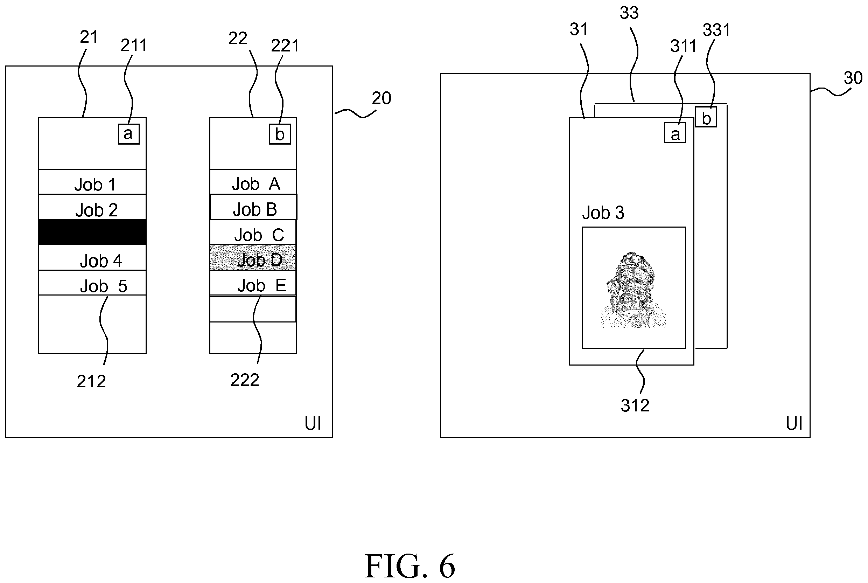

FIG. 5 shows another embodiment of the present invention. The third frame 31 and the fifth frame 33 are implemented as overlapping frames in order to save UI screen space. Dependent on the last selected item in the print job list 212 or in the print job queue 222, one frame of the frames 31, 33 is on top of the other frame. In FIG. 5 the last selected item is print job "Job D"- as indicated by the black selected item in the print job queue 222 in the second frame 22 on the UI screen 20. Therefore the fifth frame 33 is displayed on top of the third frame 31 in the UI screen 30. The fifth frame 33 displays an image of the last selected print job "Job D".
By selecting the print job "Job 3" again in the print job list 212, the third frame 31 will be displayed on top of the fifth frame 33 as shown in FIG. 6.

The applications related to the image viewer area 312 and the image viewer area 332 may be configured to receive an output type of the data to be displayed. The data in FIG. 2 - 6 are images from print jobs which may have an image format like JPEG, PNG, BMP, etc. Data in a print job may be in a document format PDF, AFP or PCL. A viewer application usually converts data in a document format like PDF, AFP or PCL to an image format like JPEG, PNG, BMP, etc. in order to show the corresponding image in the image viewer area 332. The applications may be configured to display the images from the print jobs in the image viewer area 312 and the image viewer area 332 according to the received output type.

The computer system 10 may be configured to determine if there is an output adapter available for use on the UI screen 20, 30 such that the output adapter can adapt the detailed data to be displayed in order to make the detailed data suitable for displaying as frame content in the image viewer areas 312, 332. Such output adapters may reside in the memory 11 of the computer system 10. The output adapter allows the two incompatible interfaces of for example the print job list 212 and the viewer application related to the third frame 31 to work together. The output adapter has the capability of converting an "output" of the print job list 212 to the expected "input" of the application related to the third frame 31. The use of output adapters is in particular useful when the underlying applications are renewed or replaced by a new release of the corresponding application software or when an image with a deviating image format is comprised in a print job. Output adaptors may act like a filter for product formats, but the output adapter could also have its own logic, for example with some hard processing in the background of memory 11 of the computer system 10, in order to produce totally different output like for example a list of text objects contained in a document of a print job in the print job list 212.

If despite all available adapter an image from a print job in the print job list 212 cannot be displayed in the image viewer area 312 in the third frame 31, the user may be notified, for example by a message box, a pop up box, or another visual or auditory signal, when trying to establish the digital link between the first frame 21 and the third frame 31.

According to another embodiment the selection of print job "Job 3" in the print job list 212 results in two digital products, for example the preview image displayed in the image viewer area 312 and a preflight report for the print job "Job 3" in PDF format. The preflight report may for example be displayed on the fourth frame 32 shown in FIG. 2. Thereto the fourth frame 32 may be associated with a word processor application and also a digital link according to the present invention may be established between the first frame 21 and the fourth frame 32 by activating the fourth user actionable link item 321 shown in FIG. 2. Identifying items for the user actionable link items as shown in FIG. 4 - 6 would help in order to discern connected user actionable link items.

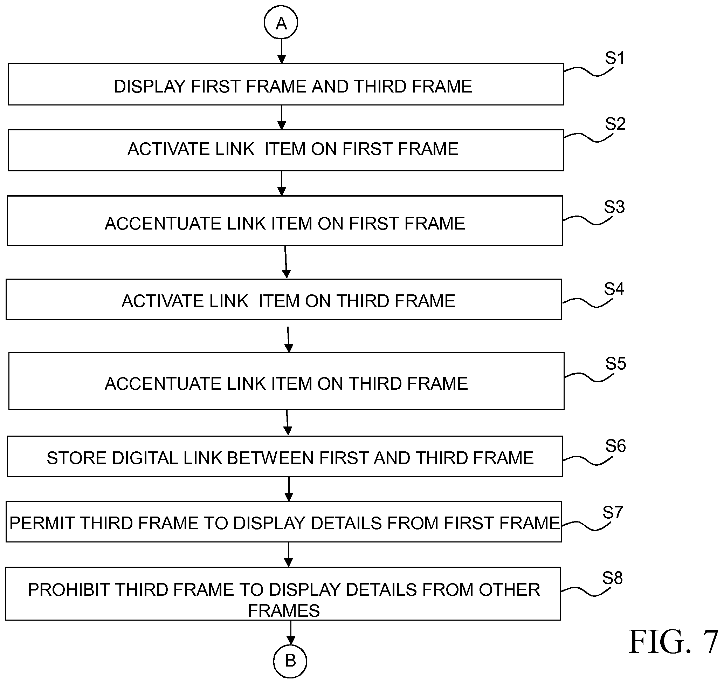

FIG. 7 is a flow diagram of a first embodiment of the method according to the present invention. The method starts in a starting point A which leads to a first step S1.

In the first step S1 the at least one user interface screen 20, 30 simultaneously displaying a first frame 21 provided with user selectable first frame content 212 and a first user actionable link item 211, and a third frame 31 provided with a third user actionable link item 311.

In a second step S2 an activation of the first user actionable link item 211 is received by the computer system 10.

In a third step S3 the first user actionable link item 211 is accentuated on the first frame 21.

In a fourth step S4 an activation of the third user actionable link item 311 is received by the computer system 10.

In a fifth step S5 the third user actionable input link item 311 is accentuated on the third frame 31.

In a sixth step S6 a digital link between the first frame 21 and the third frame 31 is stored in memory 11 of the computer system 10.

In a seventh step S7 the computer system 10 is permitting the third frame 31 to display data retrieved from memory 11 of the computer system 10 which data is a detailing dependent on a real subset of the selectable first frame content 212 of the first frame 21.

In an eighth step S8 the computer system 10 is prohibiting the third frame 31 to display data retrieved from memory 11 of the computer system 10 which data is a detailing dependent on a real subset of frame content from another frame of the plurality of frames than the first frame 21.

The method ends in an end point B.

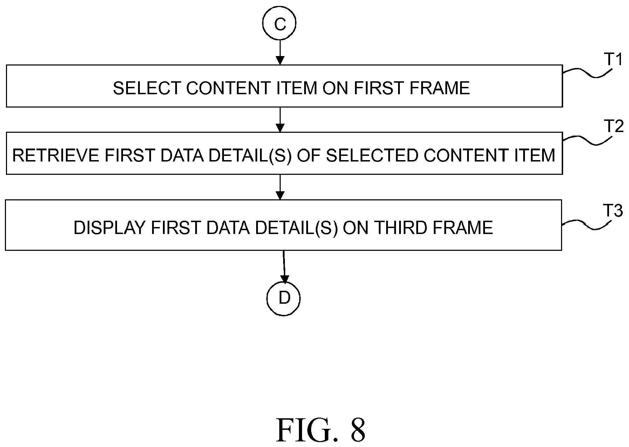

FIG. 8 is a flow diagram of a second embodiment of the method according to the present invention. The method starts in a starting point C which leads to a first step T1.

In the first step T1 a content item of the first frame 21 content is selected on the first frame 21, i.e. a selection of the content item is received by the computer system 10.

In a second step T2 first data is retrieved from memory 11 of the computer system 10 which first data is a detailing dependent on the selected content item.

In a third step T3 the first data is displayed as third frame content on the third frame 31.

The method ends in an end point D.

## Claims

1. A method of controlling at least one user interface screen (12) by means of a computer system, said at least one user interface screen (12) being arranged to display a plurality of frames (20) for displaying frame content, the method comprises the steps of:
- the at least one user interface screen (12) simultaneously displaying out of the plurality of frames (20),
a first frame provided with user selectable first frame content and a first user actionable link item, and
a second frame provided with a second user actionable link item,
- receiving an activation of the first user actionable link item,
- accentuating the first user actionable link item on the first frame,
- receiving an activation of the second user actionable link item,
- accentuating the second user actionable input link item on the second frame,
- storing a digital link between the first frame and the second frame in memory of the computer system,
- permitting the second frame to display data retrieved from memory of the computer system which data is a detailing dependent on a real subset of the selectable first frame content of the first frame, and
- prohibiting the second frame to display data retrieved from memory of the computer system which data is a detailing dependent on a real subset of frame content from another frame of the plurality of frames than the first frame.

2. Method according to claim 1, the method comprising the steps of
- selecting a content item of the first frame content on the first frame,
- retrieving first data from memory of the computer system which first data is a detailing dependent on the selected content item, and
- displaying the first data as second frame content on the second frame.

3. Method according to claim 2, wherein the method comprises the steps of
- determining if the second frame is capable of displaying the first data, before accentuating the second user actionable link item on the second frame and establishing the digital link; and
- upon a negative determination, providing a user warning on the at least one user interface screen.

4. The method according to any of the preceding claims, wherein the method comprises the step of receiving an output type of the first data from memory of the computer system and displaying the first data as second frame content on the second frame according to the received output type.

5. The method according to any of the preceding claims, wherein the method comprises the step of determining if there is an output adapter available for use on the at least one user interface screen, the output adapter being configured to adapt the first data in order to make the first data suitable as second frame content.

6. The method according to any of the preceding claims, wherein the method comprises the step of providing the first user actionable link item together with a unique identifier item, and providing the second user actionable link item with a same unique identifier item such that the combination of the first user actionable link item and the second user actionable link item is uniquely identifiable.

7. The method according to any of the preceding claims, wherein the selected one frame comprises a representation of a print job list for a printer and the other frame comprises a document browser for browsing documents of print jobs in the print job list for the printer.

8. The method according to claim 7, wherein the print job list comprises a print job queue of the printer.

9. The method according to any of the claims 7 - 8, wherein a document of a print job in the print job list is a multi-layer document and the method comprises the steps of providing a set of output adapters for browsing the multi-layer document and receiving a user selection for one output adapter out of the set of output adapters.

10. The method according to any of the preceding claims, comprising a step of removing the digital link between the first frame and the second frame from the memory of the computer system by de-selecting the first user actionable link item on the first frame and de-selecting the second user actionable link item on the second frame.

11. The method according to any of the preceding claims, wherein the method comprises the step of providing for the first frame at least two user actionable link items on the first frame, each of the at least two user actionable link items forming a unique combination with a user actionable link item on another frame of the plurality of frames.

12. A computer system controlling at least one user interface screen (12), said at least one user interface screen (12) being arranged to display a plurality of frames (20) for displaying frame content and the computer system being configured to execute any of the methods according to claims 1 - 11.

13. A computer system according to claim 12, wherein the computer system comprises a print controller for a printing system, wherein the print controller is configured to apply any of the methods according to claims 7 - 9.

14. A non-transitory computer-readable medium, comprising program code which, when executed on a computer, causes the computer to perform the steps of the method according to any of the claims 1 to 11.
